# FASCICULE DE BREVET EUROPEEN

(11) **EP 1 506 607 B1**
(45) Date de publication et mention de la délivrance du brevet: **13.09.2006**
(21) Numéro de dépôt: 03752809.8
(22) Date de dépôt: 15.05.2003
(51) Int. Cl.: H02K 1/02, H02K 1/14, H02K 7/116, H02K 7/08, H02K 5/167

(54) **MOTEUR ELECTRIQUE POUR APPAREIL ELECTROMENAGER DE PREPARATION CULINAIRE**
ELEKTROMOTOR FÜR EINEN ELEKTRISCHEN HAUSHALTS-MIXER
ELECTRIC MOTOR FOR HOUSEHOLD ELECTRICAL FOOD PROCESSOR

(30) Priorité: 17.05.2002 FR 0206104; 17.05.2002 FR 0201687
(43) Date de publication de la demande: 16.02.2005
(73) Titulaire: SEB S.A., 69130 Ecully (FR)
(72) Inventeur: GARRIGUES, Patrick, F-65260 Pierrefitte-Nestalas (FR)
(74) Mandataire: Kiehl, Hubert
(86) Numéro de dépôt international: PCT/FR2003/001472
(87) Numéro de publication internationale: WO 2003/098776

(56) Documents cités:
- DE-A- 4 447 549
- US-A- 4 866 324
- US-A- 5 128 574
- US-B1- 6 347 929

## Description

La présente invention se rapporte au domaine technique général des appareils électroménagers de préparation culinaire comportant dans un boîtier un moteur prévu pour entraîner au moins un outil de travail rotatif.

Les moteurs utilisés dans de tels appareils sont généralement du type universel ou du type asynchrone. L'un ou l'autre de ces types de moteurs présente l'inconvénient d'un encombrement axial important, dû notamment à la hauteur des empilements de tôles du stator selon l'axe de rotation du rotor.

Le document DE 44 475 49 propose d'utiliser un moteur à aimants permanents présentant un rotor de type cloche dans un appareil du type précité. Un tel moteur présente une hauteur sur l'axe réduite. Ce moteur plat peut donc être disposé dans le boîtier sous le récipient de travail. Toutefois, un tel moteur est d'une construction relativement onéreuse, car les bobines du stator sont agencées radialement, et l'aimant permanent du rotor forme une couronne.

Un moteur selon les caractéristiques du préambule de la revendication 1 est connu du document US 4 866 324.

L'objet de la présente invention est de proposer une motorisation compacte dont la construction soit plus simple et moins onéreuse, pour un appareil électroménager de préparation culinaire.

Un autre objet de la présente invention est de proposer une motorisation compacte pour appareil électroménager de préparation culinaire, qui présente des performances optimisées.

Ces objets sont atteints avec un moteur électrique pour appareil électroménager de préparation culinaire, comportant un stator fixé à un boîtier de l'appareil, le stator comprenant une partie annulaire magnétique présentant des noyaux garnis de bobines agencés autour d'un espace central, et un rotor monté sur un arbre, la partie annulaire magnétique étant réalisée à partir de poudre de matériau magnétique, le stator et le rotor présentant un entrefer axial, caractérisé en ce que le rotor comprend un support comportant l'arbre. En d'autres termes, les noyaux du stator présentent un axe parallèle à l'arbre du rotor. Un tel moteur est dit à flux axial. Le caractère magnétique isotrope de la poudre de matériau magnétique permet d'envisager des géométries de stator dont la réalisation à partir d'empilage de tôles magnétiques est très difficile et/ou présente un coût de réalisation prohibitif. De préférence, la poudre de matériau magnétique est agglomérée par compactage pour obtenir la forme désirée. Une géométrie relativement simple peut être obtenue avec des noyaux issus d'un support. Les faces supérieures des noyaux ainsi que les faces supérieures et inférieures du support peuvent être planes. L'absence d'arrondi par rapport aux faces latérales limite les coûts de réalisation du moule. La fabrication de la partie magnétique du stator est ainsi peu onéreuse. La construction proposée facilite la mise en place des bobines et l'assemblage de la motorisation, qui peut se faire par empilage. L'utilisation de poudre de matériau magnétique compactée permet de limiter considérablement les pertes par courants de Foucault, ce qui contribue à réduire l'échauffement de la motorisation. Ceci est favorable à une utilisation prolongée de l'appareil dans lequel est montée la motorisation précitée. Ceci contribue également à limiter la consommation de l'appareil.

Avantageusement alors le rotor porte un aimant permanent multipolaire réalisé en plastoaimant. Cette matière présente une meilleure résilience que la matière des ferrites traditionnelles, une meilleure stabilité dimensionnelle, et une meilleure reproductibilité des caractéristiques magnétiques. En effet, les ferrites traditionnelles sont davantage sujettes à la fissuration, du fait qu'elles sont dépourvues de liant. L'utilisation de plastoaimant permet un assemblage moins contraignant ainsi qu'une meilleure fiabilité en fonctionnement. Le plastoaimant peut être injecté sur la tôle du rotor sans surmoulage ultérieur pour le maintien.

Avantageusement les noyaux présentent une géométrie trapézoïdale. Cette disposition contribue à l'amélioration de la compacité et à l'amélioration du couple moteur, ce qui permet de meilleures performances.

Avantageusement encore, la bobine montée sur un noyau n'est pas recouverte par une pièce magnétique coiffant ledit noyau. Cette disposition permet de réaliser en une seule pièce le noyau avec la base de la partie annulaire magnétique du stator. Lors du montage, l'assemblage d'une pièce supplémentaire n'est pas nécessaire. Cette disposition permet de simplifier la construction.

Avantageusement encore, le rapport entre la hauteur de l'assemblage du stator et du rotor d'une part et le diamètre du rotor d'autre part est compris entre 3,5 et 6. Le choix d'un moteur à flux axial permet de réduire l'encombrement diamétral, tout en conservant un moteur plat. Le coefficient de performance du moteur, qui correspond au rapport (couple²) / pertes Joules, dépend du rapport du diamètre du rotor sur l'épaisseur du moteur. Les proportions proposées permettent de meilleures performances sans compliquer la construction.

Avantageusement, le diamètre du rotor est compris entre 75 mm et 150 mm. Ces dimensions permettent de fournir une puissance mécanique de 200 W et plus, tout en limitant considérablement les échauffements. Cette disposition permet de faire fonctionner l'appareil concerné en continu sans dégradation des performances. Un diamètre plus petit, par exemple jusqu'à une valeur de l'ordre de 40 mm, peut être envisagé pour des appareils requérant une puissance mécanique moindre, par exemple pour les appareils tenus à la main tels que les batteurs ou les pieds mixers, ou encore pour des appareils de type mini-hachoir.

Plus particulièrement le diamètre de la tôle de support du rotor ne dépasse pas le diamètre de l'aimant du rotor. Cette disposition permet d'optimiser le couple du moteur.

Avantageusement, la hauteur de l'assemblage du stator et du rotor est comprise entre 15 et 30 mm. L'augmentation de la hauteur n'est pas un paramètre aussi influent sur la performance du moteur que l'augmentation du diamètre. C'est pourquoi la hauteur peut être plus facilement limitée avec la géométrie de motorisation proposée.

Avantageusement, le stator et le rotor présentent un entrefer supérieur ou égal à 0,5 mm. Cette disposition permet de limiter la précision du guidage mécanique du rotor et de l'assemblage du rotor et du stator.

Avantageusement, le stator et le rotor présentent un entrefer inférieur ou égal à 1,5 mm. Cette disposition est particulièrement intéressante pour un rotor comportant un aimant multipolaire en plastoaimant. Cette disposition permet un meilleur rendement entraînant un moindre échauffement. La précision dimensionnelle des plastoaimants est meilleure que celle des ferrites, et un surmoulage de maintien n'est pas nécessaire. Par contre l'induction des plastoaimants est moindre. C'est pourquoi l'entrefer doit être réduit.

Avantageusement, le stator et le rotor présentent un entrefer inférieur ou égal à 2 mm. Cette disposition est particulièrement intéressante pour un rotor comportant un aimant multipolaire en ferrite. Cette disposition permet aussi un meilleur rendement entraînant un moindre échauffement. La précision dimensionnelle des ferrites est moindre, un maintien efficace tel que par exemple un surmoulage est nécessaire, mais leur induction est plus élevée. C'est pourquoi une valeur un peu plus élevée d'entrefer peut être utilisée.

Avantageusement encore, le moteur présente une alimentation triphasée et le stator comporte 9 noyaux. Une telle disposition permet de réduire le diamètre du stator.

Avantageusement alors, le rotor comporte 3 paires de pôles magnétiques. Cette disposition permet un meilleur équilibrage du rotor.

Avantageusement encore, le diamètre de positionnement des noyaux est compris entre 50 et 100 mm. Cette disposition permet d'intégrer des éléments mécaniques, tels que par exemple guidage et/ou réducteur, entourés par les bobines.

Avantageusement l'arbre est guidé en rotation par deux éléments de guidage montés respectivement dans la paroi et dans une autre paroi du boîtier, le rotor étant disposé entre la paroi et l'autre paroi. Les éléments de guidage peuvent être formés par exemple par des paliers, des coussinets ou encore des roulements.

Avantageusement alors l'un au moins des éléments de guidage présente un degré de liberté d'orientation. Les éléments de guidage peuvent alors être formés par exemple par des coussinets à rotule ou des roulements oscillants. Ces dispositions permettent d'offrir un degré de liberté d'inclinaison pour l'arbre du rotor, ce qui permet de rendre le montage moins précis et aussi d'obtenir une motorisation ayant une consommation à vide beaucoup plus faible. Avantageusement encore les deux éléments de guidage présentent un degré de liberté d'orientation. Cette disposition renforce encore les avantages précédents.

Avantageusement encore la hauteur entre les faces des éléments de guidage opposées au rotor est inférieure à 4 fois le diamètre de l'arbre, et de préférence inférieure à 3,5 fois le diamètre de l'arbre. De manière surprenante, malgré les vitesses élevées sur l'arbre, pouvant atteindre 10000 t/min, et les efforts fournis, le guidage est suffisant pour obtenir un fonctionnement satisfaisant. Cette disposition permet de réduire la hauteur de la motorisation. Une compacité remarquable peut ainsi être obtenue pour une motorisation présentant un usage polyvalent dans un appareil électroménager de préparation culinaire.

Avantageusement encore une rondelle ressort est montée entre l'autre paroi et le rotor. Cette disposition permet d'amortir les mouvements longitudinaux de l'arbre, ce qui améliore la rotation du rotor.

Avantageusement un réducteur entraîné par l'arbre est agencé au moins partiellement dans l'espace central. Le réducteur peut être un réducteur épicycloïdal. Le réducteur peut comporte plusieurs étages, et avantageusement plusieurs entraînements présentant différents rapports de réduction. Un entraînement direct peut également être prévu.

L'invention sera mieux comprise à l'étude d'un exemple de réalisation et d'une variante, pris à titre nullement limitatif, illustrés dans les figures annexées dans lesquelles :
- la figure 1 est une vue en coupe transversale d'un exemple de réalisation de la motorisation d'un appareil électroménager de préparation culinaire selon l'invention,
- la figure 2 est une vue éclatée de la motorisation montrée à la figure 1, dans laquelle les bobines ne sont pas représentées.
- la figure 3 est une vue de dessus du stator avec les bobines de la motorisation montrée à la figure 1,
- la figure 4 est une vue partielle en coupe transversale d'une variante de l'exemple de réalisation montré aux figures 1 à 3.

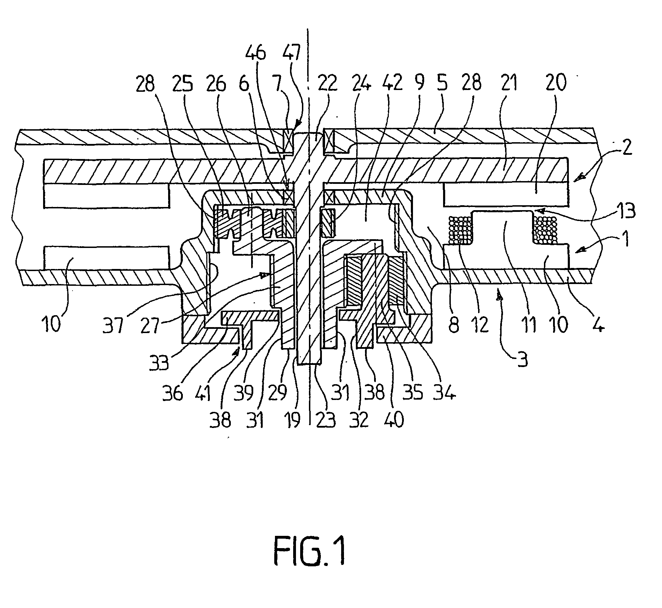

La figure 1 montre un moteur électrique pour appareil électroménager de préparation culinaire, comportant un stator 1 et un rotor 2.

Le stator 1 comprend une partie annulaire magnétique 10 dégageant un espace central 8. La partie annulaire magnétique 10 peut être réalisée à partir de poudre de matériau magnétique, notamment à partir de poudre de fer telle que la poudre de fer type Somalloy 500 ou 550 de la société Höganäs. De préférence la poudre de matériau magnétique est agglomérée par compactage selon la géométrie souhaitée. La partie annulaire magnétique 10 comporte autour de l'espace central 8 des noyaux 11 garnis de bobines 12. Les bobines 12 sont par exemple au nombre de neuf lorsque le moteur est piloté par une commande électronique triphasée. La partie annulaire magnétique 10 du stator 1 est montée sur une paroi 4 d'un boîtier 3.

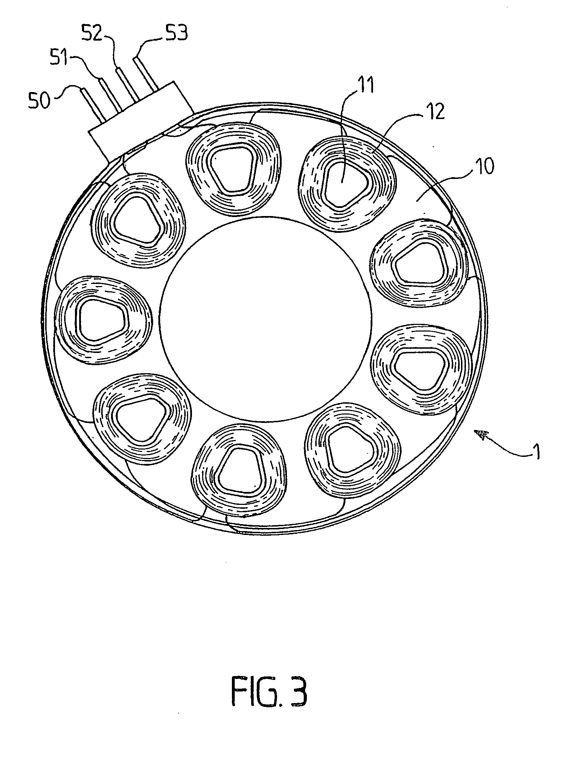

Dans l'exemple de réalisation illustré aux figures 1 à 3, le stator 1 comporte neuf bobines 12. Tel que montré à la figure 3, les bobines 12 sont associées par trois en série, chaque série de trois étant câblée en étoile. L'alimentation des trois phases 51, 52, 53 est pilotée électroniquement. Le neutre 50 peut servir pour le contrôle et/ou la mesure. Les bobines 12 comportent 160 tours de fil, le diamètre des fils étant de 0,425 mm. Tel que bien visible aux figures 1 et 3, les noyaux 11 sont dépourvus de champignon. Le stator 1 ne comporte pas de partie magnétique s'interposant entre les bobines 12 et le rotor 2.

Un isolant, non montré aux figures, peut être disposé entre les bobines 12 et la partie annulaire magnétique 10 du stator 1.

La partie annulaire magnétique 10 du stator présente un diamètre extérieur de 105 mm, un diamètre intérieur de 55 mm, et une épaisseur de base de 5 mm.

Les noyaux 11 présentent vus de dessus une géométrie trapézoïdale, les faces intérieures et extérieures étant raccordées aux faces latérales par des arrondis. Le rayon des arrondis est de préférence supérieur à 3 mm. Les faces extérieures sont plus grandes que les faces intérieures. Les faces latérales de deux noyaux 11 adjacents sont parallèles. La largeur diamétrale maximale radiale ou transversale des noyaux 11 est de 12 mm, et la hauteur est de 9,5 mm.

Le rotor 2 comprend un aimant permanent multipolaire 20 en forme d'anneau, monté sur un support 21 en forme de disque. L'aimant 20 pourrait également présenter une forme de disque du fait de la géométrie axiale de l'entrefer 13 entre le stator 1 et le rotor 2. L'aimant 20 est fixé au support 21 par tout moyen approprié, notamment par collage ou par surmoulage. L'aimant 20 peut notamment être réalisé en plastoaimant. Le support 21 peut notamment être formé par une tôle en acier doux.

Dans l'exemple de réalisation illustré aux figures 1 à 3, le rotor 2 présente un diamètre extérieur de 105 mm correspondant à celui de l'aimant 20. Le diamètre intérieur de l'aimant 20 est de 54 mm. L'épaisseur du support 21 est de 4 mm. L'épaisseur de l'aimant 20 est de 5 mm. Le rotor 2 comporte trois paires de pôles magnétiques.

Le support 21 comporte un arbre 22 tournant dans la paroi 4 du boîtier 3. De préférence l'arbre 22 s'étend de part et d'autre du rotor 2 et tourne également dans une autre paroi 5 du boîtier 3. Tel que visible sur la figure 1, le rotor 2 est agencé entre la paroi 4 et l'autre paroi 5 du boîtier 3. Des paliers 6, 7 montés dans les parois 4, 5 du boîtier 3 facilitent la rotation de l'arbre 22. Les paliers 6, 7 forment des éléments 46, 47 de guidage en rotation et en translation de l'arbre 22.

Dans l'exemple de réalisation illustré aux figures 1 à 3, l'arbre 22 présente un diamètre de 6 mm au niveau des éléments de guidage 46, 47. La hauteur de l'assemblage entre la face de l'élément 46 opposée au rotor 2 et la face de l'élément 47 opposée au rotor 2 est de 16 mm. Le rapport de ces deux dimensions est inférieur à 3.

L'entrefer 13 entre le sommet des noyaux 11 et l'aimant 20 est axial. En d'autres termes, l'entrefer 13 s'étend selon une direction parallèle à l'axe de rotation de l'arbre 22 du rotor 2. La hauteur de l'entrefer est de 1 mm.

La hauteur de l'assemblage du stator 1 et du rotor 2 est de 23 mm. Le rapport entre la hauteur de l'assemblage du stator 1 et du rotor 2 d'une part et le plus grand des diamètres respectifs du stator 1 et du rotor 2 d'autre part est d'environ 4,5. Le diamètre de positionnement des noyaux 11 est de 80 mm.

La paroi 4 du boîtier 3 comporte un renfoncement 9 s'étendant dans l'espace central 8. La partie annulaire magnétique 10 est montée sur la paroi 4 autour de l'extérieur du renfoncement 9. L'arbre 22 traverse le renfoncement 9 pour entraîner un réducteur 30. A cet effet, l'arbre 22 porte un pignon primaire 24. Des planétaires primaires 25 montés chacun sur un moyeu 26 issu d'un support principal 27 coopèrent d'une part avec le pignon primaire 24 et d'autre part avec un secteur annulaire denté 28 appartenant au boîtier 3. Le support principal 27 présente une extrémité libre 29 formant un entraînement primaire 31 coaxial à l'arbre 22.

L'arbre 22 comporte une extrémité libre 23 traversant le support principal 27 et formant un entraînement direct 19 pour un outil de travail rotatif (non illustré aux figures). Le support principal 27 forme ainsi un arbre creux.

Un pignon secondaire 33 est agencé de manière axiale sur le support principal 27. Des planétaires secondaires 34 montés chacun sur un moyeu 35 issu d'un support secondaire 36 coopèrent d'une part avec le pignon secondaire 33 et d'autre part avec un second secteur annulaire denté 37 appartenant au boîtier 3. Le support secondaire 36 présente une extrémité libre 38 formant un entraînement secondaire 32. L'extrémité libre 29 du support principal 27 est agencée dans une ouverture 39 de l'extrémité libre 38 du support secondaire 36. Ainsi l'entraînement primaire 31 est médian et l'entraînement secondaire 32 est périphérique.

Un capot 40 fixé au boîtier 3 permet de maintenir les éléments du réducteur 30 en place. Le capot 40 ferme le renfoncement 9 en laissant un passage 41 pour les entraînements 31, 32. Le capot 40 peut être démontable ou non. Le capot 40 forme avec le renfoncement 9 un logement 42 pour le réducteur 30. Du fait que l'extrémité 29 et l'extrémité 35 s'étendent par le passage 41 du capot 40, le réducteur 30 est logé partiellement dans le renfoncement 9. Toutefois, le réducteur pourrait être logé en totalité dans le renfoncement.

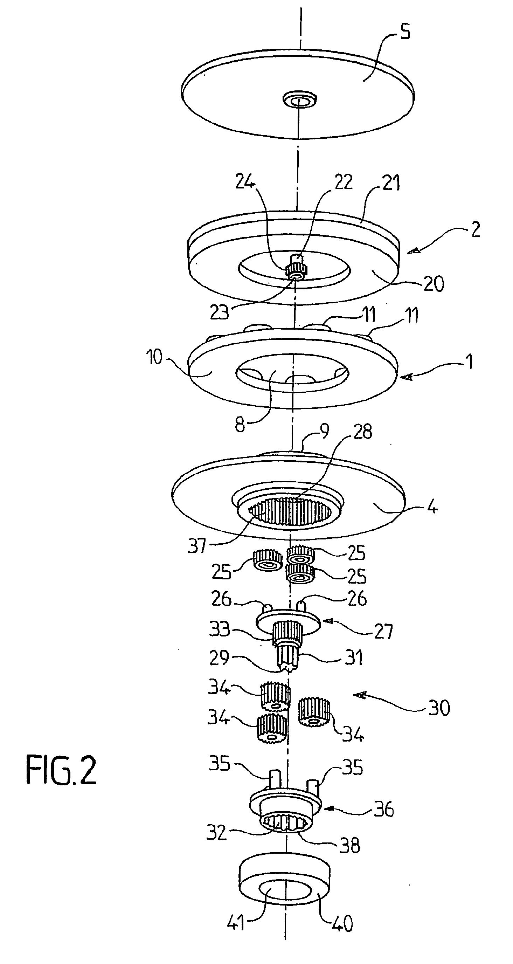

De préférence, tel que montré à la figure 2, les planétaires primaires 25 et les planétaires secondaires 34 sont au nombre de trois. Le rapport de réduction du premier étage est par exemple de 5 et le rapport de réduction du deuxième étage est par exemple de 4.

Les parois 4, 5 du boîtier 3 peuvent être réalisées en un matériau élastiquement moins rigide que le matériau des pignons et que le matériau des planétaires, pour limiter les vibrations. Par exemple, les parois 4, 5 du boîtier 3 peuvent être réalisées en polypropylène chargé fibre de verre, alors que les pignons et les planétaires peuvent être réalisés en polyamide chargé de fibres de verre et de PTFE.

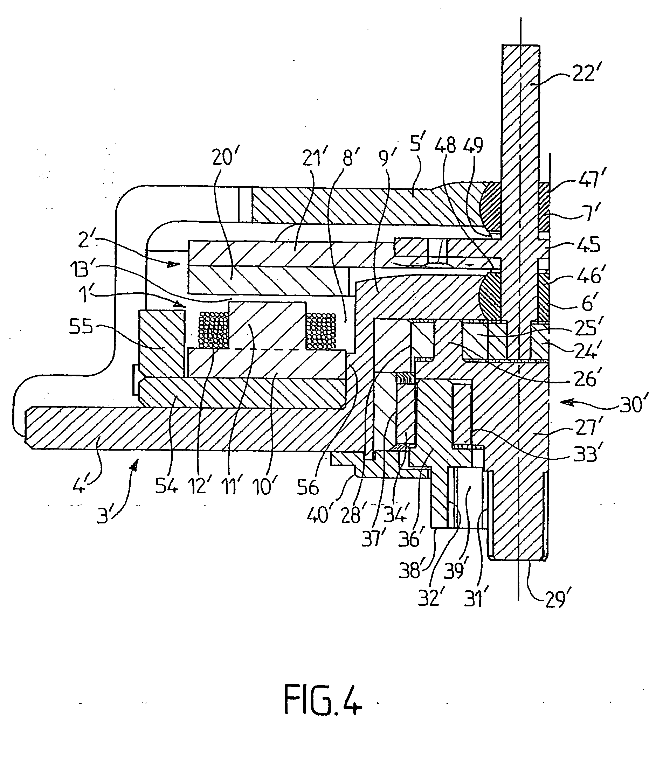

La variante de réalisation illustrée à la figure 4 diffère de l'exemple de réalisation précédent essentiellement par le montage de l'arbre 22' du rotor 2' ainsi que le montage de la partie annulaire magnétique 10' du stator 1'.

Le support 21' de l'aimant 20' est monté sur un plateau 45 issu de l'arbre 22'. L'arbre 22' est monté sur un élément 46' de guidage en rotation et en translation fixé à la paroi 4' du boîtier 3', et sur un élément 47' de guidage en rotation et en translation fixé à la paroi 5' du boîtier 3'.

Tel que montré à la figure 4, les éléments 46', 47' sont des coussinets 6', 7' montés sur rotule. Une rondelle 48 est interposée entre le coussinet 6' et le rotor 2'. A cet effet le coussinet 6' dépasse légèrement de la paroi 4'. Une rondelle ressort 49 est interposée entre le coussinet 7' et le rotor 2'. A cet effet le coussinet 7' dépasse légèrement de la paroi 5'.

A titre de variante, l'un et/ou l'autre de ces coussinets pourrait être fixe, de préférence le coussinet disposé du côté du stator 1'. Un épaulement prenant appui sur la paroi 4' est alors préférable pour ledit coussinet. L'un et/ou l'autre de ces coussinets pourrait aussi être remplacé par un roulement, de préférence par un roulement oscillant. Les coussinets montés sur rotule et les roulements oscillants permettent d'offrir un degré de liberté d'inclinaison pour l'arbre 22', ce qui permet d'utiliser une précision de montage moindre, mais aussi d'obtenir une motorisation ayant une consommation à vide beaucoup plus faible. La hauteur de l'assemblage entre la face de l'élément 46' opposée au rotor 2' et la face supérieure de l'élément 47' opposée au rotor 2' est de 20 mm. Le diamètre de l'arbre 22' étant de 6 mm, le rapport de ces deux dimensions est inférieur à 3,5.

L'entrefer 13' entre la face supérieure des noyaux 11' portant les bobines 12' et l'aimant 20' est de l'ordre de 1 mm. Le réducteur 30' entraîné par l'arbre 22' est agencé partiellement dans l'espace central 8' entouré par les noyaux 11'. Le réducteur 30' est logé partiellement à l'intérieur du renfoncement 9' ménagé dans la paroi 4'. Le réducteur 30' ne présente pas d'entraînement direct.

La partie annulaire magnétique 10' du stator 1' montée sur la paroi 4' repose sur une cale 54. La partie annulaire magnétique 10' est montée autour de l'extérieur du renfoncement 9'. La partie annulaire magnétique 10' est maintenue latéralement par une paroi 56 du renfoncement 9'. La partie annulaire magnétique 10' est maintenue par l'intermédiaire d'une bride 55 retenue par la paroi 5'. Les parois 4',5' sont par exemple assemblées au moyen de vis, non montrées aux figures. Le capot 40' ferme le renfoncement 9'.

La motorisation avec réducteur intégrée ainsi proposée présente une consommation à vide très faible, pouvant être inférieure à 10 W. La consommation en charge est également peu élevée, même sous des charges importantes telles que le pétrissage d'un kilo de pâte, où elle peut rester inférieure à 150 W. Le moteur obtenu présente une compacité remarquable pour un usage polyvalent s'étendant sur une large gamme de vitesse et de couples. Le moteur obtenu présente de plus une endurance très supérieure à celle des moteurs universels utilisés habituellement dans les appareils ménagers, pour une consommation moindre. Le moteur sans réducteur présente une consommation à vide inférieure à 20 W. La présence du réducteur permet de stabiliser l'arbre, en ramenant l'inertie au centre de l'arbre.

Le réducteur 30, 30' décrit est de type épicycloïdal à deux étages de réduction. Toutefois un réducteur à un seul étage, ou un réducteur à plusieurs étages comportant au moins un entraînement peuvent également être envisagés. Un réducteur à deux étages et à deux entraînements présente toutefois l'avantage d'associer une gamme de vitesses étendue à un encombrement limité. D'autres types de réducteurs peuvent être envisagés, notamment des réducteurs utilisant des roues dentées montées sur des axes fixes à la place des planétaires montés sur les supports tournants. Les secteurs dentés ménagés sur le boîtier peuvent également être envisagés sur le stator, notamment sur la partie magnétique.

Le deuxième étage de réduction présente un rapport de réduction de 20. Le deuxième étage de réduction permet d'obtenir des vitesses comprises entre 50 et 600 t/min avec un couple de 10 à 20 N/m, par exemple pour pétrir de la pâte, râper ou émincer des carottes ou du fromage, ou encore réaliser des préparations hachées à base de viande.

Le premier étage de réduction présente un rapport de réduction de 5. Le premier étage de réduction permet d'obtenir des vitesses jusqu'à 2000 t/min avec un couple de 2,5 à 5 N/m, par exemple pour hacher du persil.

Un entraînement direct peut être prévu dans le réducteur 30'. Par ailleurs, un entraînement direct peut être ménagé sur l'autre extrémité libre de l'arbre 22, 22' opposée au réducteur 30, 30', en complément ou en remplacement de l'entraînement direct 19. L'entraînement direct 19 peut également être supprimé.

Avec un entraînement direct, l'outil peut tourner à des vitesses de l'ordre de 8000 t/min avec un couple de 0,5 à 1 N/m pour réaliser des préparations liquides habituellement réalisées dans un appareil de type blender. Usuellement de tels appareils comportent des moteurs universels dont la vitesse à vide est supérieure à 12000 t/min. Toutefois la vitesse chute dès lors que l'appareil contient une préparation. De ce fait la vitesse en charge dans de tels appareils atteint très rarement 8000 t/min. Avec la motorisation proposée, le couple disponible sur une large plage de vitesse permet de réaliser des préparations directement à partir de fruits ou de légumes sans qu'il soit nécessaire de rajouter de l'eau.

Le réducteur 30, 30' peut être supprimé, par exemple pour réaliser un appareil de type blender destiné à la réalisation de préparations liquides. Le couple nécessaire étant peu important, un entraînement direct peut être envisagé. Un tel appareil peut tourner à des vitesses de 2000 à 10000 t/min environ.

Le moteur électrique décrit dans les exemples de réalisation proposés peut être un moteur à commutation électronique, ou un moteur synchrone. Toutefois un moteur dans lequel le rotor est dépourvu d'aimant permanent multipolaire, notamment un moteur à réluctance variable, est également envisageable.

Egalement à titre de variante, la géométrie et/ou les dimensions du stator, la géométrie et/ou les dimensions du rotor, le nombre de bobines et/ou leur câblage peuvent être modifiés sans sortir du cadre de l'invention. Notamment, la partie annulaire magnétique 10, 10' du stator 1, 1' peut avantageusement présenter un diamètre extérieur compris entre 80 et 150 mm, un diamètre intérieur compris entre 40 et 80 mm, et une épaisseur sur la base reliant les noyaux comprise entre 3 et 7 mm. La section des noyaux 11, 11' peut présenter une géométrie différente, par exemple circulaire. La largeur diamétrale maximale de chaque noyau est avantageusement comprise entre 10 et 15 mm. La hauteur de chaque noyau est avantageusement comprise entre 5 et 12 mm. Le diamètre de positionnement des noyaux est avantageusement compris entre 50 et 100 mm. Le rotor 2, 2' peut avantageusement présenter un diamètre compris entre 80 et 150 mm. L'épaisseur du support 21, 21' est avantageusement comprise entre 3 et 5 mm.

L'épaisseur de l'aimant 20, 20' est avantageusement comprise entre 3 et 7 mm. L'aimant 20, 20' peut présenter des stries ou des nervures, en particulier sur le diamètre intérieur, par exemple des nervures inclinées, pour forcer la ventilation.

La présente invention n'est nullement limitée à l'exemple de réalisation décrit et à ses variantes, mais englobe de nombreuses modifications dans le cadre des revendications.

## Revendications

1. Moteur électrique pour appareil électroménager de préparation culinaire, comportant un stator (1) fixé à un boîtier (3) de l'appareil, le stator (1) comprenant une partie annulaire magnétique (10) présentant des noyaux (11) garnis de bobines (12) agencés autour d'un espace central (8), et un rotor (2) monté sur un arbre (22), la partie annulaire magnétique (10) étant réalisée à partir de poudre de matériau magnétique, le stator (1) et le rotor (2) présentant un entrefer (13) axial, **caractérisé en ce que** le rotor (2) comprend un support (21) comportant l'arbre (22).

2. Moteur électrique selon la revendication 1, **caractérisé en ce que** le support (21) s'étend radialement au-delà des bobines (12).

3. Moteur électrique selon l'une des revendications 1 ou 2, **caractérisé en ce que** le support (21) s'étend radialement jusqu'à la périphérie de la partie annulaire magnétique (10).

4. Moteur électrique selon l'une des revendications 1 à 3, **caractérisé en ce que** le rotor (2) porte un aimant (20) permanent multipolaire.

5. Moteur électrique selon la revendication 4, **caractérisé en ce que** l'aimant (20) permanent multipolaire est réalisé en plastoaimant.

6. Moteur électrique selon l'une des revendications 4 ou 5, **caractérisé en ce que** l'aimant (20) permanent multipolaire est fixé au support (21).

7. Moteur électrique selon l'une des revendications 1 à 6, **caractérisé en ce que** les noyaux (11) présentent une géométrie trapézoïdale.

8. Moteur électrique selon l'une des revendications 1 à 7, **caractérisé en ce que** le rapport entre la hauteur de l'assemblage du stator (1) et du rotor (2) d'une part et le diamètre du rotor (2) d'autre part est compris entre 3,5 et 6.

9. Moteur électrique selon l'une des revendications 1 à 8, **caractérisé en ce que** le diamètre du rotor (2) est compris entre 75 mm et 150 mm.

10. Moteur électrique selon l'une des revendications 1 à 9, **caractérisé en ce que** la hauteur de l'assemblage du stator (1) et du rotor (2) est comprise entre 15 et 30 mm.

11. Moteur électrique selon l'une des revendications 1 à 10, **caractérisé en ce que** le stator (1) et le rotor (2) présentent un entrefer (13) supérieur ou égal à 0,5 mm.

12. Moteur électrique selon l'une des revendications 1 à 11, **caractérisé en ce que** le stator (1) et le rotor (2) présentent un entrefer (13) inférieur ou égal à 1,5 mm.

13. Moteur électrique selon l'une des revendications 1 à 11, **caractérisé en ce que** le stator (1) et le rotor (2) présentent un entrefer (13) inférieur ou égal à 2 mm.

14. Moteur électrique selon l'une des revendications 1 à 13, **caractérisé en ce que** le moteur présente une alimentation triphasée et **en ce que** le stator (1) comporte 9 noyaux (11).

15. Moteur électrique selon la revendication 14, **caractérisé en ce que** le rotor (2) comporte 3 paires de pôles magnétiques.

16. Moteur électrique selon l'une des revendications 1 à 15, **caractérisé en ce que** le diamètre de positionnement des noyaux (11) est compris entre 50 et 100 mm.

17. Moteur électrique selon l'une des revendications 1 à 16 **caractérisé en ce que** l'arbre (22) est guidé en rotation par deux éléments de guidage (46, 47) montés respectivement dans une paroi (4) et dans une autre paroi (5) du boîtier (3), le rotor (2) étant disposé entre la paroi (4) et l'autre paroi (5).

18. Moteur électrique selon la revendication 17, **caractérisé en ce que** la hauteur entre les faces des éléments de guidage (46, 47) opposées au rotor (2) est inférieure à 4 fois le diamètre de l'arbre (22), et de préférence inférieure à 3,5 fois le diamètre de l'arbre (22).

19. Moteur électrique selon l'une des revendications 1 à 18, **caractérisé en ce qu'**un réducteur (30) entraîne par l'arbre (22) est agencé au moins partiellement dans l'espace central (8).

20. Moteur électrique selon l'une des revendications 1 à 19, **caractérisé en ce qu'**une extrémité libre (23) de l'arbre (22) forme un entraînement direct (19).

21. Moteur électrique selon la revendication 19, **caractérisé en ce qu**'une extrémité libre (23) de l'arbre (22) forme un entraînement direct (19) du côté du réducteur (30).

22. Moteur électrique selon la revendication 19, **caractérisé en ce qu'**un entraînement direct est ménagé sur une extrémité libre de l'arbre (22) opposée au réducteur (30).

## Claims

1. An electric motor for a household electrical appliance for preparing food, said electric motor comprising a stator (1) fastened to a housing (3) of the appliance, the stator (1) having a magnetic annular portion (10) that presents cores (11) provided with coils (12) arranged around a central space (8), and a rotor (2) mounted on a shaft (22), the magnetic annular portion (10) being made from a magnetic material in powder form, the stator (1) and the rotor (2) presenting an axial airgap (13), said electric motor being **characterized in that** the rotor (2) includes a support (21) provided with the shaft (22).

2. An electric motor according to claim 1, **characterized in that** the support (21) extends radially beyond the coils (12).

3. An electric motor according to claim 1 or claim 2, **characterized in that** the support (21) extends radially to the periphery of the magnetic annular portion (10).

4. An electric motor according to any one of claims 1 to 3, **characterized in that** the rotor (2) carries a multi-pole permanent magnet (20).

5. An electric motor according to claim 4, **characterized in that** the multi-pole permanent magnet (20) is made of a magnetic plastic.

6. An electric motor according to claim 4 or claim 5, **characterized in that** the multi-pole permanent magnet (20) is fastened to the support (21).

7. An electric motor according to any one of claims 1 to 6, **characterized in that** the cores (11) are trapezium-shaped.

8. An electric motor according to any one of claims 1 to 7, **characterized in that** the ratio between the height of the assembly comprising the stator (1) and the rotor (2) and the diameter of the rotor (2) lies in the range 3.5 to 6.

9. An electric motor according to any one of claims 1 to 8, **characterized in that** the diameter of the rotor (2) lies in the range 75 mm to 150 mm.

10. An electric motor according to any one of claims 1 to 9, **characterized in that** the height of the assembly comprising the stator (1) and the rotor (2) lies in the range 15 mm to 30 mm.

11. An electric motor according to any one of claims 1 to 10, **characterized in that** the stator (1) and the rotor (2) present an airgap (13) greater than or equal to 0.5 mm.

12. An electric motor according to any one of claims 1 to 11, **characterized in that** the stator (1) and the rotor (2) present an airgap (13) less than or equal to 1.5 mm.

13. An electric motor according to any one of claims 1 to 11, **characterized in that** the stator (1) and the rotor (2) present an airgap (13) less than or equal to 2 mm.

14. An electric motor according to any one of claims 1 to 13, **characterized in that** the motor has a three-phase power supply, and **in that** the stator (1) has 9 cores (11).

15. An electric motor according to claim 14, **characterized in that** the rotor (2) has three pairs of magnetic poles.

16. An electric motor according to any one of claims 1 to 15, **characterized in that** the diameter for positioning the cores (11) lies in the range 50 mm to 100 mm.

17. An electric motor according to any one of claims 1 to 16, **characterized in that** the shaft (22) is guided in rotation by two guide elements (46, 47) mounted respectively in one wall (4) and in another wall (5) of the housing (3), the rotor (2) being disposed between the wall (4) and the other wall (5).

18. An electric motor according to claim 17, **characterized in that** the height between the faces of the guide elements (46, 47) that are remote from the rotor (2) is less than 4 times the diameter of the shaft (22), and preferably less than 3.5 times the diameter of the shaft (22).

19. An electric motor according to any one of claims 1 to 18, **characterized in that** gearing (30) driven by the shaft (22) is arranged at least in part in the central space (8).

20. An electric motor according to any one of claims 1 to 19, **characterized in that** a free end (23) of the shaft (22) forms a direct drive (19).

21. An electric motor according to claim 19, **characterized in that** the free end (23) of the shaft (22) forms a direct drive (10) in the vicinity of the gearing (30).

22. An electric motor according to claim 19, **characterized in that** a direct drive is provided on a free end of the shaft (22) remote from the gearing (30).

## Patentansprüche

1. Elektromotor für ein Elektrohaushaltsgerät zur Nahrungsmittelzubereitung, mit einem Stator (1), der an einem Gehäuse (3) des Geräts befestigt ist, wobei der Stator (1) einen magnetischen Ringteil (10) umfasst, der mit Spulen (12) versehene Kerne (11) aufweist, welche um einen zentralen Raum (8) angeordnet sind, und mit einem Rotor (2), der an einer Welle (22) angebracht ist, wobei der magnetische Ringteil (10) aus dem Pulver eines magnetischen Materials besteht, wobei der Stator (1) und der Rotor (2) einen axialen Luftspalt aufweisen, **dadurch gekennzeichnet, dass** der Rotor (2) einen Träger (21) umfasst, der die Welle (22) aufweist.

2. Elektromotor nach Anspruch 1, **dadurch gekennzeichnet, dass** sich der Träger (21) radial über die Spulen (12) hinaus erstreckt.

3. Elektromotor nach einem der Ansprüche 1 oder 2, **dadurch gekennzeichnet, dass** sich der Träger (21) radial bis zum Umfang des magnetischen Ringteils (10) erstreckt.

4. Elektromotor nach einem der Ansprüche 1 bis 3, **dadurch gekennzeichnet, dass** der Rotor (2) einen mehrpoligen Dauermagnet (20) trägt.

5. Elektromotor nach Anspruch 4, **dadurch gekennzeichnet, dass** der mehrpolige Dauermagnet (20) als Kunststoffmagnet ausgeführt ist.

6. Elektromotor nach einem der Ansprüche 4 oder 5, **dadurch gekennzeichnet, dass** der mehrpolige Dauermagnet (20) am Träger (21) befestigt ist.

7. Elektromotor nach einem der Ansprüche 1 bis 6, **dadurch gekennzeichnet, dass** die Kerne (11) eine trapezförmige Geometrie aufweisen.

8. Elektromotor nach einem der Ansprüche 1 bis 7, **dadurch gekennzeichnet, dass** das Verhältnis zwischen der Höhe der Baugruppe aus Stator (1) und Rotor (2) einerseits und dem Durchmesser des Rotors (2) andererseits zwischen 3,5 und 6 beträgt.

9. Elektromotor nach einem der Ansprüche 1 bis 8, **dadurch gekennzeichnet, dass** der Durchmesser des Rotors (2) zwischen 75 mm und 150 mm beträgt.

10. Elektromotor nach einem der Ansprüche 1 bis 9, **dadurch gekennzeichnet, dass** die Höhe der Baugruppe aus Stator (1) und Rotor (2) zwischen 15 und 30 mm beträgt

11. Elektromotor nach einem der Ansprüche 1 bis 10, **dadurch gekennzeichnet, dass** der Stator (1) und der Rotor (2) einen Luftspalt (13) aufweist, der größer als oder gleich 0,5 mm ist.

12. Elektromotor nach einem der Ansprüche 1 bis 11, **dadurch gekennzeichnet, dass** der Stator (1) und der Rotor (2) einen Luftspalt (13) aufweist, der kleiner als oder gleich 1,5 mm ist.

13. Elektromotor nach einem der Ansprüche 1 bis 11, **dadurch gekennzeichnet, dass** der Stator (1) und der Rotor (2) einen Luftspalt (13) aufweist, der kleiner als oder gleich 2 mm ist.

14. Elektromotor nach einem der Ansprüche 1 bis 13, **dadurch gekennzeichnet, dass** der Motor eine Dreiphasenversorgung aufweist und dass der Stator (1) 9 Kerne (11) umfasst.

15. Elektromotor nach Anspruch 14, **dadurch gekennzeichnet, dass** der Rotor (2) 3 Magnetpolpaare umfasst.

16. Elektromotor nach einem der Ansprüche 1 bis 15, **dadurch gekennzeichnet, dass** der Positionierungsdurchmesser der Kerne (11) zwischen 50 und 100 mm beträgt.

17. Elektromotor nach einem der Ansprüche 1 bis 16, **dadurch gekennzeichnet, dass** die Welle (22) durch zwei Führungselemente (46, 47) in Drehung geführt ist, die jeweils in einer Wand (4) und einer weiteren Wand (5) des Gehäuses (3) angebracht sind, wobei der Rotor (2) zwischen der Wand (4) und der weiteren Wand (5) angeordnet ist.

18. Elektromotor nach Anspruch 17, **dadurch gekennzeichnet, dass** die Höhe zwischen der dem Rotor (2) gegenüberliegenden Seiten der Führungselemente (46, 47) kleiner als 4 Mal der Durchmesser der Welle (22) und vorzugsweise kleiner als 3,5 Mal der Durchmesser der Welle 22 ist.

19. Elektromotor nach einem der Ansprüche 1 bis 18, **dadurch gekennzeichnet, dass** ein von der Welle (22) angetriebenes Getriebe mindestens teilweise im zentralen Raum (8) angeordnet ist.

20. Elektromotor nach einem der Ansprüche 1 bis 19, **dadurch gekennzeichnet, dass** ein freies Ende (23) der Welle (22) einen direkten Antrieb (19) bildet.

21. Elektromotor nach Anspruch 19, **dadurch gekennzeichnet, dass** ein freies Ende (23) der Welle (22) an der Getriebeseite (30) einen direkten Antrieb (19) bildet.

22. Elektromotor nach Anspruch 19, **dadurch gekennzeichnet, dass** ein direkter Antrieb an einem dem Getriebe (30) gegenüberliegenden freien Ende der Welle (22) vorgesehen ist.
